# EUROPÄISCHE PATENTSCHRIFT

(11) **EP 0 700 846 B1**
(45) Veröffentlichungstag und Bekanntmachung des Hinweises auf die Patenterteilung: **05.11.1997**
(21) Anmeldenummer: 95250193.0
(22) Anmeldetag: 08.08.1995
(51) Int. Cl.: B65G 35/06

(54) **Vorrichtung zum Transportieren von Stückgut, wie Werkstückträgern, Behältern oder Transporteinheiten, insbesondere an Folgearbeitsplätzen**
Transporting device for parcels, such as work piece-holders, containers or transport units, particularly in a sequence of workplaces
Dispositif pour le transport de colis, tels que des porte-pieces, conteneurs ou unités de transport, en particulier pour une séquence de stations de travail

(30) Priorität: 12.09.1994 DE 4433398
(43) Veröffentlichungstag der Anmeldung: 13.03.1996
(73) Patentinhaber: MANNESMANN Aktiengesellschaft, 40213 Düsseldorf (DE)
(72) Erfinder: Nüssle, Gerhard, D-71263 Weil der Stadt (DE)
(74) Vertreter: Presting, Hans-Joachim, Dipl.-Ing.

(56) Entgegenhaltungen:
- EP-A- 0 205 197
- EP-A- 0 390 484
- DE-U- 9 012 413

## Beschreibung

Die Erfindung betrifft eine Vorrichtung zum Transportieren von Stückgut, wie Werkstückträgern, Behältern oder Transporteinheiten, insbesondere an Folgearbeitsplätzen, wobei die Anzahl und die Größe der Werkstückträger bzw. Behälter die Abmessungen des Systems bestimmen, mittels an den Folgearbeitsplatz-Enden angeordneten, angetriebenen Schlepptellern sowie zwischen den Schlepptellern jeweils tangential und längsverlaufenden Geradstrecken-Gurtförderern.

Folgearbeitsplätze werden häufig bei Montageaufgaben eingesetzt, insbesondere mit geringen Jahresstückzahlen und Losgrößen, die eine Teilung des Montage-Inhalts auf mehrere Personen nicht rechtfertigt. Trotz geringer Produktmengen können bei Folgearbeitsplätzen die Vorteile einer Fließfertigung, wie z.B. das Unterteilen der Aufgaben in beliebig viele Arbeitseinheiten, genutzt werden.

Aus Fördern und Heben 42 (1992), Nr. 10, sind 180°-Schleppteller-Eckumlenkungen mit angrenzenden Gurtförderern bekannt. Aus solchen Förderern werden Umlaufsysteme in der Montagetechnik, Behälterfördertechnik und Werkstückträger-Transporttechnik gebildet. Jeder Schleppteller und jede angrenzende Förderstrecke benötigt einen eigenen Antrieb. Die bekannten Umlaufsysteme sind daher aufwendig und kostenintensiv.

Des weiteren zeigt die DE 32 31 868 C2 einen Gurtförderer für insbesondere als Werkstückträger ausgebildete Stückgüter. Der Gurtförderer weist zwei endlose und parallel zueinander verlaufende Flachgurte auf, deren Obertrum zur Aufnahme des Stückguts auf einem Längsträger gleitet. Das Stückgut wird im Bereich seiner Seiten jeweils von einem Gurt des Doppelgurtförderers getragen.

Ferner ist aus der DE 20 32 980 ein Förderer mit einem endlosen Transportband bekannt. Um ein weitestgehend rechtwinkliges Abzweigen der Förderstrecke des Förderers zu ermöglichen, wird vorgeschlagen, im Bereich des Abzweigs das Transportband speziell umzulenken. Das rücklaufende Trum des Transportbands wird unterhalb der Abzweigung um eine Umlenkrolle geführt, die um eine vertikale Achse drehbar ist. Hierzu wird vor und nach dieser Umlenkrolle das Transportband aus seiner horizontalen in eine vertikale Lage gedreht oder umgekehrt.

Der vorliegenden Erfindung liegt das Problem zugrunde, eine Vorrichtung zum Transportieren von Stückgut zu schaffen, die als Endlosförderer mit an den Enden angeordneten Schlepptellern und dazwischen angeordneten, hin- und rückführenden Gurtförderstrecken ausgebildet ist, so daß nur minimale Kosten entstehen und ein einfacher Antrieb möglich ist.

Diese Aufgabe wird erfindungsgemäß bei einer gattungsgemäßen Vorrichtung durch die Merkmale des Anspruchs 1 gelöst.

Das System kann somit mit nur einem einzigen Gurt und einem einzigen Antrieb betrieben werden. Es ist dementsprechend einfacher und kostengünstiger als das bekannte System. Die Gurtumlenkscheibe bildet gleichzeitig den Schleppteller. Beide gegenläufigen Geradstrecken werden ebenfalls mit demselben Gurt angetrieben. Ein Getriebe ist nicht mehr erforderlich. Ein nutzloser Gurtrücktransport wird außerdem vermieden.

Eine Verbesserung der Erfindung sieht vor, daß der Gurt als Flachgurt ausgeführt ist und auf den Geradstrecken in der horizontalen Ebene flach aufliegt und an den Umfängen der Schleppteller im wesentlichen in einer vertikalen Ebene verläuft. In den flachen Strecken kann daher auf einen Werkstückträger, einen Behälter, eine Transporteinheit u.dgl. eine Transportkraft übertragen werden und in den vertikalen Umfangsbereichen eine Antriebskraft auf die Schleppteller.

Die Verwendung eines Flachgurtes wird dadurch begünstigt, daß der Flachgurt am Übergang zwischen der horizontalen Ebene und der vertikalen Ebene mittels in Laufrichtung in einer Höhenlage beabstandeten Umlenkrollen geführt ist.

Eine andere Verbesserung der Erfindung ist dadurch gegeben, daß die Schleppteller als an den Stirnseiten ebenflächige Zylinder aus Granit hergestellt sind. Die Funktionssicherheit der Schleppteller wird nur durch plane Flächen ermöglicht. Bei Stahltellern treten Verzugsprobleme auf. Bei entsprechend dickeren Tellern ergibt sich der Vorteil, den Schleppteller gleichzeitig als "Riemenscheibe" verwenden zu können.

Es ist in diesem Sinne weiterhin auch vorteilhaft, daß die Schleppteller am Umfang ballig im Sinne einer Riemenscheibe ausgeführt sind.

Die Vorrichtung kann vorteilhaft dahingehend gestaltet sein, daß über der horizontalen Ebene der Schleppteller Behälter für Arbeits- bzw. Montageteile ergonomisch angeordnet sind.

Eine solche Anordnung kann vorteilhafterweise derart gestaltet sein, daß die Behälter für Arbeits- bzw. Montageteile etwa halbkreisförmig um den Bedienerarbeitsplatz angeordnet sind.

Die Erfindung bildet sonach den Folgearbeitsplatz weiter, indem gegenüber zum Bedienerarbeitsplatz an der dortigen Geradstrecke eine oder mehrere (automatische) Produktionseinrichtungen angeordnet sind.

Die Bedienungsweise ist vorteilhafterweise so gestaltet, daß bei Einschalten eines sich am Bedienerarbeitsplatz befindlichen Stoppers bzw. Vorstoppers der Antrieb eingeschaltet bleibt, so daß der Gurt unter dem Werkzeugträger schleifend bewegbar ist.

Ein Ausführungsbeispiel der Erfindung ist in der Zeichnung dargestellt und wird im folgenden näher beschrieben.

Es zeigen:
- Fig. 1: eine Draufsicht auf den Folgearbeitsplatz
- Fig. 2: eine Draufsicht wie Fig. 1, jedoch bei abgenommenen Behältern für Arbeits- bzw. Montageteile und ohne Produktionseinrichtung,
- Fig. 3: eine Seitenansicht in Richtung des Pfeiles A gemäß Fig. 2 und
- Fig. 4: eine Einzelheit E gemäß Fig. 3 in vergrößertem Maßstab.

Eine Vorrichtung für Folgearbeitsplätze 1 zum Transportieren von Stückgut 2, wie Werkstückträgern, Behältern, Transporteinheiten ist aus mittels an den Enden 3 angeordneten kreisrunden Schlepptellern 4 und 5 gebildet. Die Anzahl und die Größe der Werkstückträger 2 bzw. Behälter bestimmen hierbei die Abmessungen des gesamten Systems. Zwischen den Schlepptellern 4 und 5 sind jeweils tangential an die Kreisform der Schleppteller 4 bzw. 5 angepaßte und in Längsrichtung verlaufende Geradstrecken-Gurtförderer 6 vorhanden.

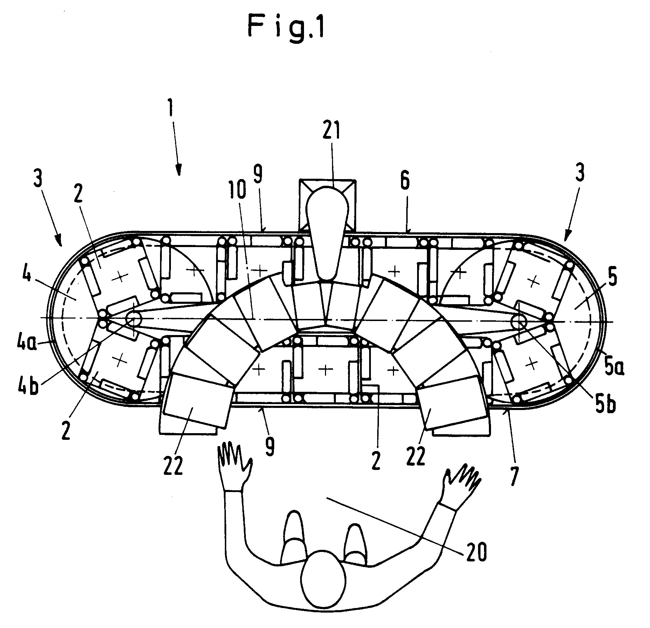

Die Schleppteller 4 und 5 sind mittels eines einzigen, endlosen um die Umfänge 4a bzw. 5a geführten Gurtes 7 und eines einzigen über eine Riemenschiebe die Antriebskraft übertragenden Antriebes 8 angetrieben. Die Werkstückträger 2 liegen in den Geradstrecken 9 auf dem Gurt 7 und auf achsparallel zur Verbindungslinie 10 der Drehachse 4b bzw. 5b der Schlepptellerlager verlaufende Reihen 11 von nicht angetriebenen Stützrollen 11 a auf, deren Wirkungsebene 12 auf dem Niveau der Schleppteller 4 bzw. 5 liegt (Fig. 1).

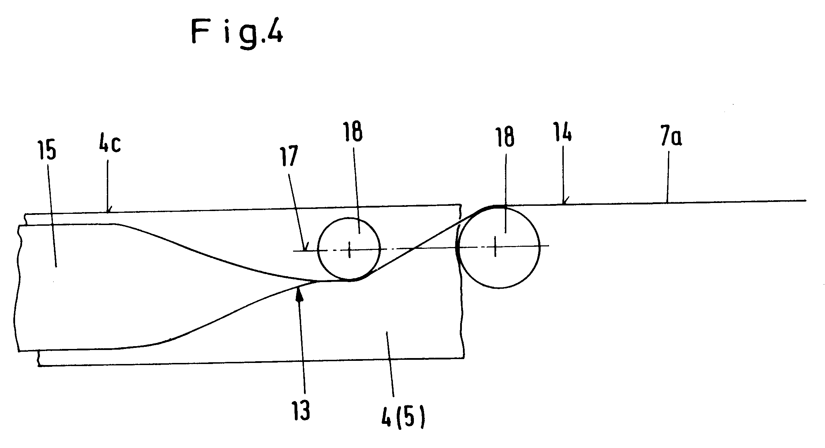

Der Gurt 7 ist als Flachgurt 7a ausgeführt (Fig. 4) und liegt auf den Geradstrecken 9 in der horizontalen Ebene 14 flach auf und verläuft an den Umfängen 4a, 5a der Schleppteller 4 bzw. 5 im wesentlichen in einer vertikalen Ebene 15. Der Flachgurt 7a ist an einem Übergang 13 zwischen der horizontalen Ebene 14 und der vertikalen Ebene 15 mittels in Laufrichtung 16 in einer gemeinsamen Höhenlage 17 beabstandeten Umlenkrollen 18 geführt, die, wie in Fig. 4 dargestellt ist, mit unterschiedlich großen Durchmessern ausgeführt sind.

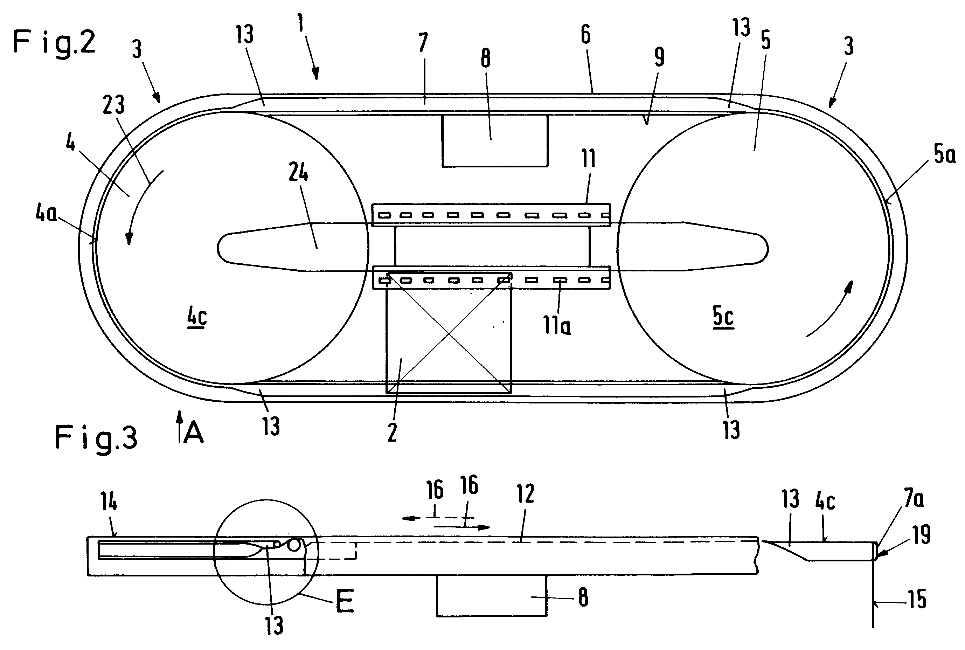

Die Schleppteller sind verzugsfrei mit an ihren Stirnflächen 4c bzw. 5c ebenflächige Zylindern aus Granit hergestellt und deshalb von entsprechender Dicke. Dadurch ist es möglich, daß die Schleppteller 4 bzw. 5 an ihren Umfängen 4a bzw. 5a ballig wie eine Riemenscheibe 19 ausgeführt sind (Fig. 3).

Wie in Fig. 2 gezeigt ist, werden die Werkstückträger 2 über die Stirnflächen 4c bzw. 5c der Schleppteller 4 bzw. 5 im Kreis in einer Umfangsrichtung 23 geführt, wobei eine Kulisse 24 diese Führung unterstützt.

Über der horizontalen Ebene 14 und noch über dem Niveau der Werkstückträger 2 sind an dem Bedienerarbeitsplatz 20 Behälter 22 für Arbeits- bzw. Montageteile ergonomisch angeordnet. Die Behälter 22 für die Arbeits- bzw. Montageteile sind etwa halbkreisförmig um den Bedienerarbeitsplatz 20 herumgeführt.

Gegenüber dem Bedienerarbeitsplatz 20 an der dortigen Geradstrecke 9 können ein oder mehrere (automatische) Produktionseinrichtungen 21 angeordnet sein. Bei Einschalten eines sich am Bedienerarbeitsplatz 20 befindlichen, nicht dargstellten Stoppers bzw. Vorstoppers, bleibt der Antrieb 8 eingeschaltet, so daß der Gurt 7 unter dem Werkstückträger 2 schleift.

## Patentansprüche

1. Vorrichtung zum Transportieren von Stückgütern (2), wie Werkstückträgern, Behältern oder Transporteinheiten, insbesondere an Folgearbeitsplätzen, die einen Endlosförderer mit zwei an den Enden (3) angeordneten, die Stückgüter auf einer Stirnfläche (4c, 5c) transportierenden, angetriebenen Schlepptellern (4, 5) aufweist, die je auf einer Seite die Stückgüter (2) von einer parallel zur Stirnfläche (4c, 5c) angeordneten, einen angetriebenen Gurt (7) aufweisenden, Gurtförderstrecke (9) aufnehmen und an eine parallel zur Stirnfläche (4c, 5c) angeordnete, einen angetriebenen Gurt (7) aufweisende Gurtförderstrecke (9) abgeben,
dadurch gekennzeichnet,
daß ein einziger angetriebener endloser Gurt (7) in den beiden Förderstrecken (9) auf einer Seite das Stückgut (2) trägt, welches je auf der anderen Seite auf Rollen (11a) gestützt ist, und von je einer Umfangsfläche (4a, 5a) der Schleppteller (4, 5) in paralleler Anordnung zu dessen jeweiliger Drehachse (4b, 5b) an den Enden umgelenkt wird.

2. Vorrichtung nach Anspruch 1,
dadurch gekennzeichnet,
daß der Flachgurt (7a) am Übergang zwischen der Gurtförderstrecke (6) und den Schlepptellern (4, 5) mittels in Laufrichtung (16) in einer Höhenlage (17) beabstandeten Umlenkrollen (18) geführt ist.

3. Vorrichtung nach Anspruch 1 oder 2,
dadurch gekennzeichnet,
daß die Schleppteller (4, 5) an den Stirnseiten (4c, 5c) ebenflächig sind und aus Granit bestehen.

4. Vorrichtung nach einem der Ansprüche 1 bis 3,
dadurch gekennzeichnet,
daß die Schleppteller (4, 5) als Riemenscheibe (19) ballig sind.

5. Vorrichtung nach einem der Ansprüche 1 bis 4,
dadurch gekennzeichnet,
daß beim Stoppen des Stückguts (2) mit einem Stopper oder Vorstopper der Gurt (7) unter dem Stückgut (2) schleift.

6. Vorrichtung nach einem der Ansprüche 1 bis 5,
dadurch gekennzeichnet,
daß die Stückgüter (2) von darüber, insbesondere halbkreisförmig, angeordneten Behältern (22) Teile erhalten.

## Claims

1. A device for transporting piece goods (2), such as workpiece holders, containers or transport units, in particular on consecutive-operation stations, which comprises an endless conveyor with two driven friction-driven plates (4, 5) arranged at the ends (3) and transporting the piece goods on an end face (4c, 5c), which friction-driven plates each receive on one side the piece goods (2) from a belt conveyor section (9) arranged parallel to the end face (4c, 5c) and having a driven belt (7) and deposit them on a belt conveyor section (9) arranged parallel to the end face (4c, 5c) and having a driven belt (7),
characterised in that
a single driven endless belt (7) in both conveyor sections (9) bears the piece goods (2) on one side, which goods are each supported on the other side on rollers (11a), and is deflected by one peripheral surface (4a, 5a) in each case of the friction-driven plates (4, 5) in a parallel arrangement to the respective axis of rotation (4b, 5b) thereof at the ends.

2. A device according to Claim 1, characterised in that the flat belt (7a) at the transition between the belt conveyor section (6) and the friction-driven plates (4, 5) is guided by means of deflecting rolls (18) spaced apart in the direction of travel (16) in a vertical position (17).

3. A device according to Claim 1 or 2, characterised in that the friction-driven plates (4, 5) are flat-surfaced on the end faces (4c, 5c) and are made of granite.

4. A device according to one of Claims 1 to 3, characterised in that the friction-driven plates (4, 5) are crowned as a pulley (19).

5. A device according to one of Claims 1 to 4, characterised in that when the piece goods (2) are stopped with a stopper or pre-stopper the belt (7) slips under the piece goods (2).

6. A device according to one of Claims 1 to 5, characterised in that the piece goods (2) receive parts from containers (22) arranged thereover, in particular in a semicircle.

## Revendications

1. Dispositif pour transporter des marchandises (2), comme des porte-pièces, des récipients ou des unités de transport, en particulier en des emplacements de travail en séquence, qui présente un transporteur sans fin comportant deux plateaux entraînés (4,5), agencés aux extrémités (3), et transportant les marchandises sur une surface frontale (4c,5c), plateaux qui reçoivent, à chaque fois, sur un côté, les marchandises (2) d'une étendue de transport (9) agencée parallèlement à la surface frontale (4c,5c) et présentant une courroie entraînée (7), et qui délivrent les marchandises (2) sur une étendue de transport (9) agencée parallèlement à la surface frontale (4c,5c) et présentant une courroie entraînée (7),
caractérisé en ce qu'une courroie sans fin entraînée unique (7) porte, dans les deux étendues de transport (9), sur un côté, les marchandises (2), lesquelles s'appuient, à chaque fois, sur l'autre côté, sur des rouleaux (11a) et les plateaux (4,5) sont renvoyés aux extrémités à chaque fois par une surface périphérique (4a,5a) en agencement parallèle par rapport à leur axe de rotation respectif (4b,5b).

2. Dispositif selon la revendication 1,
caractérisé en ce que la courroie plate (7a) est guidée à la transition entre l'étendue de transport à courroie (6) et les plateaux (4,5) au moyen de rouleaux de renvoi (18) écartés dans la direction d'avance (16) à une position en hauteur (17).

3. Dispositif selon la revendication 1 ou 2,
caractérisé en ce que les plateaux (4,5) sont plans sur les faces frontales (4c,5c) et sont constitués de granit.

4. Dispositif selon une des revendications 1 à 3,
caractérisé en ce que les plateaux (4,5), sous forme de disque à courroie (19), sont bombés.

5. Dispositif selon une des revendications 1 à 4,
caractérisé en ce que, lors de l'arrêt des marchandises (2) par une butée ou pré-butée, la courroie (7) frotte sous les marchandises (2).

6. Dispositif selon une des revendications 1 à 5,
caractérisé en ce que les marchandises (2) reçoivent des pièces de récipients (22) agencés au-dessus, en particulier de façon semi-circulaire.
